(19) Europäisches Patentamt
European Patent Office
Office européen des brevets

(11) Publication number: **0 325 570 A1**

(12) # EUROPEAN PATENT APPLICATION

(21) Application number: 89850010.3

(22) Date of filing: 16.01.89

(51) Int. Cl.[4]: C 08 G 59/40
C 08 G 77/42, G 03 G 15/20,
G 11 B 7/24

(30) Priority: 20.01.88 US 145959

(43) Date of publication of application:
26.07.89 Bulletin 89/30

(84) Designated Contracting States: DE FR GB

(71) Applicant: International Business Machines Corporation
Old Orchard Road
Armonk, N.Y. 10504 (US)

(72) Inventor: Hahn, Bernd Richard
5022 Grey Feather Circle
San Jose, CA 95136 (US)

Hofer, Donald Clifford
12235 Foothill Ave
San Martin, CA 95046 (US)

Haidar, Bassel (NMN)
CNRS 24th Ave. Kennedy
F-68200 Mulhouse (FR)

Russell, Thomas Paul
19986 Graystone Lane
San Jose, CA 95120 (US)

Hedrick, James Lupton, Jr.
37195, Creekside Terrace Apt. 365
Fremont, CA 94536 (US)

Shattuck, Meredith David
800 Spring Grove Rd.
Hollister, CA 95023 (US)

(74) Representative: Ahlman, Bertel et al
IBM Svenska AB Intellectual Property Department
S-163 92 Stockholm (SE)

(54) **Poly(hydroxyether-diphenyldimethylsiloxane) copolymers and uses thereof.**

(57) The invention relates to poly(hydroxyether-diphenyldimethylsiloxane) copolymers and to their use in hot roll fusers for copier-printer systems, and for bonding optical storage disks.

It solves the problem of failure of hot roll fusers. It also represents an improvement in adhesives for the bonding of optical storage disks.

EP 0 325 570 A1

**Description**

## POLY(HYDROXYETHER-DIPHENYLDIMETHYLSILOXANE) COPOLYMERS AND USES THEREOF

The present invention is concerned with poly(hydroxyetherdiphenyldimethylsiloxane) copolymers and with the use of such copolymers in fuser rollers and in bonding of optical disks.

Siloxane copolymers have been known in the prior art. See, for example, Government Accession No. AD-A136782, December 1, 1983, Yorkgitis et al; Hedrick et al, Polymer Preprints, 28(1), p. 99, 1987; and U. S. Patent 4,624,998 of Keil. None of these references, however, shows copolymers having the structure of the copolymers of the present invention. Specifically, the prior art does not show the diphenyldimethylsiloxane portion of the copolymer.

The problem of hot roll fuser failure has been the subject of very much research for years. Many solutions have been proposed, but none involves the use of the copolymers of the present invention.

The copolymers of the present invention also represent a great improvement over prior art adhesives for use in the bonding of optical storage disks.

The present invention is concerned with a novel class of elastomers which can be both chemically cross-linked as well as microphase separated. The elastomers afford improved mechanical properties over typical siloxane networks. The structure of these novel copolymers allows them to be amenable to conventional processing techniques such as liquid injection molding.

The copolymers of the present invention are particularly useful as a component of a hot roll fuser to be used in toner fuser copier-printer systems. A primary cause of hot roll fuser failure is the formation of a step at the page edge. The step is believed to be the result of elastomer compression and abrasive wear exacerbated by elastomer swell. The novel copolymers of the present invention provide great improvements in solving these problems. Swell in poly(dimethylsiloxane) oil is completely eliminated by the use of the hydroxyetherdiphenyldimethylsiloxane copolymers of the present invention as matrix resins in hot roll fuser formulation. The compounds of the present invention have additional advantages in that they contain no residual acid or base catalyst, as do prior art materials. These residues lead to significant degradation at high temperatures. The copolymers of the present invention contain no residual cyclic siloxanes, which are volatile and lead to weight loss and degradation at elevated temperatures. Fusers made according to the present invention are particularly resistant to compression set, which is believed to be responsible at least in part for step formation.

The copolymers of the present invention are also particularly useful in bonding of magneto-optical disks. In such bonding, two coated, grooved glass substrates have to be bonded together.

In order to meet the reliability requirements, the adhesive must lead to the following bond properties: a high reliability bond, stable under high temperature/high humidity conditions employed during accelerated life tests; chemically inert in contact with the other materials in the disc package (e.g. rare earth metal alloys); physically inert, i.e. no stress cracking problems etc.; no release of volatiles during and after the bonding process; can be applied economically during mass production without hazards. Until the present invention, no adhesive has been found, which would meet those requirements with satisfaction.

Commercially available epoxy based adhesives, which represent the most widely used class of adhesives, do not provide adequate bond stability at high temperature/high humidity environments. Typical for epoxies are also high internal stresses and cracking problems and they perform poorly under thermal cycling conditions. Most commercially available siloxanes, on the other hand, release acidic acid or methanol, which is a problem in an optical disk package with glass on both sides. Furthermore, pure siloxanes are generally relatively poor adhesives.

The following examples are given solely to illustrate preferred embodiments of the present invention, many variations of which will occur to those skilled in the art, without departing from the spirit or scope thereof.

## EXAMPLES

Materials:

Octamethylcyclotetrasiloxane (commonly known as $D_4$), octaphenylcyclotetrasiloxane (commonly known as $D_4''$) and 1,3-bis(aminopropyl)tetramethyldisiloxane were purchased from Petrarch. D.E.R. 332 (diglycidylether of bisphenol-A (DGEBA)) was purchased from Dow Chemical Company and had a titrated molecular weight of 342 g/mol. The tetramethylammonium hydroxide pentahydrate was purchased from Aldrich and used without further purification.

Synthesis of Oligomers:

The $\alpha$, w-bis(aminopropyl) polydimethylsiloxane oligomers of various molecular weights were synthesized by base (tetramethylammonium hydroxide pentahydrate) catalyzed-bulk equilibration reaction using various wt. % of $D_4$ and $D_4''$ with 1,3-bis(aminopropyl)tetramethyldisiloxane end blocker. The equilibration was maintained at 80 degrees C for 48 hours, and then the reaction temperature was increased to 150 degrees C to decompose the catalyst. The equilibrium cyclics remaining in the oligomers were removed by vacuum distillation (150 degrees C).

Network Formation:

The aminopropyl terminated polydimethyldiphenylsiloxane oligomers were reacted with DGEBA in the bulk (i.e. without the use of a solvent). The two components became miscible at 110 degrees C in five minutes and network formation was complete in one hour.

The aminopropyl terminated siloxane oligomers were reacted with DGEBA (Scheme 1) in the bulk as described in the experimental section.

SCHEME 1

Synthesis of Poly(hydroxyether-diphenyldimethylsiloxane) Copolymers

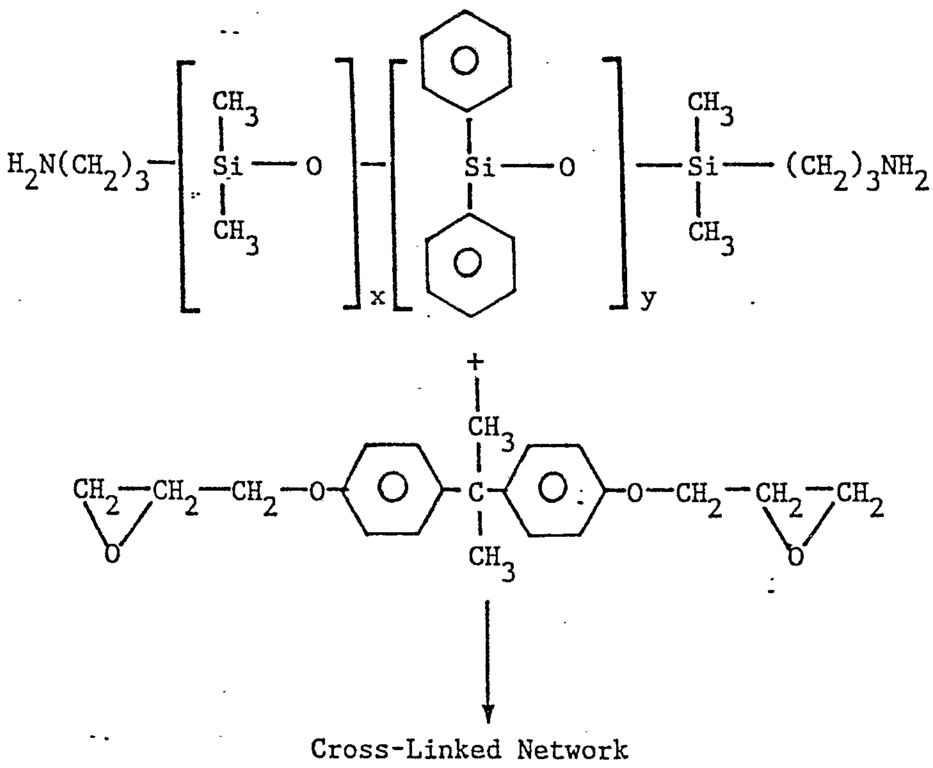


In this monomer oligomer synthetic approach, a hydroxyether linkage is formed between the siloxane blocks. Table 1 contains the thermal analysis of the networks synthesized. Two Tg's were observed for those samples containing up to 50 wt. % diphenylsiloxane suggesting a two-phase morphology. This is one of the few examples of a material which is both chemically cross-linked as well as microphase separated. The hard segment is believed to be composed of the DGEBA monomer unit as well as the contributions of the end groups of the siloxane oligomer.

The dynamic mechanical results over a broad temperature range using both the tensile and shear mode for the network structures clearly illustrate the two-phase morphology observed in the DSC results. Furthermore, a high modulus is obtained and retained up to 250 degrees C suggesting that these materials retain their two-phase morphology at elevated temperatures. In addition to a high modulus, these materials had elongations up to 70%, which is indicative of a very tough material.

Table I

Characteristics of Poly(hydroxyether-diphenyldimethylsiloxane) Networks

| Sample Number | wt.% Diphenyl | <Mn>,g/mol. PSX | Thermal Analysis of Networks, degree C $T_g$[a] | $T_g$[b] |
|---|---|---|---|---|
| 1 | 0 | 5,400 | -119 | 10 |
| 2 | 25 | 4,800 | -102 | 20 |
| 3 | 50 | 5,400 | -55 | 17 |
| 4 | 75 | 5,700 | -10 | -- |

[a]Soft Segment
[b]Hard Segment

Fuser Formation

Hydroxyethersiloxane copolymers were synthesized from 1,3-bis(aminopropyl)polydimethyl-diphenylsiloxane or bis(aminopropyl)-polymethylphenylsiloxane oligomers and diglycidylether of bisphenol-A (DGEBA). The siloxane oligomers were synthesized by the bulk coequilibration of various weight % cyclic dimethylsiloxane and diphenylsiloxane or methylphenylsiloxane tetramers using transient base catalyst. The molecular weight and functionality was controlled by incorporation of a 3-bis(aminopropyl)tetramethyldisiloxane end blocker.

Elastomer slabs were prepared by mixing DGEBA and siloxane oligomer in stiochiometric amounts along with the appropriate filler(s) to give the desired thermal conductivity and mechanical properties. After curing, the slabs were evaluated for mechanical properties and oil swell. The results obtained are shown in the following Table. The molecular weight of the siloxane oligomer was varied from 3,000 to 10,500. It can be seen that the copolymer becomes more compliant as the molecular weight is increased.

Hydroxyethersiloxane Copolymer

Unfilled

| Siloxane MW | Tensile | Elongation | Durometer | Oil Swell |
|---|---|---|---|---|
| 4,900 | 56 PSI | 32% | 33 Shore A | None |
| 6,600 | 47 | 33% | 33 | None |
| 10,500 | 25 | 20% | 22 | None |

With 56% Zinc Oxide & 7% Graphite Fillers

| Siloxane MW | Tensile | Elongation | Durometer | Oil Swell |
|---|---|---|---|---|
| 3,000 | 944 PSI | 20% | 90 Shore A | None |
| 4,900 | 629 | 23% | 87 | None |
| 6,600 | 604 | 27% | 82 | None |
| 10,500 | 498 | 50% | 72 | None |

Bonding of Optical Disk

Bonding Material:

The adhesive materials utilized in this bonding process are hydroxyether linked copolymers synthesized from 1,3-bis(aminopropyl)-polydimethyl or polydimethyldiphenylsiloxane oligomers and diglydicylether of bisphenol-A (DGEBA). The siloxane oligomers were synthesized by the bulk coequilibration of various weight percents cyclic dimethylsiloxane tetramer with cyclic diphenylsiloxane tetramer using a basic catalyst. The molecular weight and functionality was controlled by the incorporation of 1,3-bis-(aminopropyl)tetramethyldisoloxane end blocker.

Bonding Process:

Before bonding, the DGEBA (A) and Siloxane oligomers (B) are mixed in a A/B ratio of 0.295 at elevated temperature (e.g. 120°C), at which temperature they become homogeneous and start to react after a few minutes. The warm adhesive is then applied, while it has very low viscosity, and both sides of the optical disk are put togther with the adhesive in between. Both sides aligned, the bond is then cured (e.g. 1 hr. at 120°C) to

its final strength. Curing can be done anywhere between about 65° C (several hours) and about 130° C (one hour). Application and curing above 100° C has the advantage that the bonding surfaces remain dry and free of adsorbed water leading to higher bond strength. No high pressure etc. is required.

## Claims

1. A poly(hydroxyether-diphenyldimethylsiloxane) copolymer.
2. A copolymer as claimed in claim 1 which is both chemically cross-linked and microphase separated.
3. A hot roll fuser for use in toner fuser copierprinter systems, said fuser comprising a copolymer as claimed in claim 1.
4. An optical storage disk bonded by a copolymer as claimed in claim 1.